Europäisches Patentamt

European Patent Office

Office européen des brevets

(19)

(11) Numéro de publication: **0 259 389**
**B1**

(12) **FASCICULE DE BREVET EUROPEEN**

(45) Date de publication du fascicule du brevet: **26.09.90**

(51) Int. Cl.⁵: **B 29 C 47/04**, B 29 C 47/56

(21) Numéro de dépôt: **87901328.2**

(22) Date de dépôt: **05.03.87**

(86) Numéro de dépôt international:
**PCT/CH87/00026**

(87) Numéro de publication internationale:
**WO 87/05258 11.09.87 Gazette 87/20**

(54) DISPOSITIF D'ALIMENTATION D'UNE TETE D'EXTRUSION DE MATIERE PLASTIQUE.

(30) Priorité: **06.03.86 CH 928/86**

(43) Date de publication de la demande:
**16.03.88 Bulletin 88/11**

(45) Mention de la délivrance du brevet:
**26.09.90 Bulletin 90/39**

(84) Etats contractants désignés:
**AT BE CH DE FR GB IT LI LU NL SE**

(56) Documents cités:
**DE-A-1 933 570**
**DE-A-2 921 943**
**DE-B-1 080 646**
**FR-A-1 277 313**
**FR-A-2 400 424**
**LU-A- 28 707**
**US-A-3 256 562**
**US-A-3 752 617**
**US-A-3 801 249**
**US-A-4 276 250**

(73) Titulaire: **MAILLEFER S.A.**
**Route de Bois**
**CH-1024 Ecublens (CH)**

(72) Inventeur: **COMPAGNON, Michel**
**Grand-Rue 7**
**CH-1814 La Tour-de-Peilz (CH)**

(74) Mandataire: **Rochat, Daniel Jean et al**
**Bovard SA Ingénieurs-Conseils ACP**
**Optingenstrasse 16**
**CH-3000 Bern 25 (CH)**

Courier Press, Leamington Spa, England.

## Description

La présente invention a pour objet un dispositif d'alimentation d'une tête d'extrusion de matière plastique selon le préambule de la revendication 1.

Des dispositifs de ce genre, déjà connus, par exemple de DE-A-2921943, sont utilisés notamment pour réaliser par extrusion des produits allongés en matière plastique présentant une couche superficielle colorée.

Il est courant d'utiliser pour cela deux méthodes:

1. On ajoute à la masse de matière plastique des mélanges maîtres de couleurs,

2. On utilise une extrudeuse additionnelle qui dépose autour de la forme extrudée une peau superficielle colorée.

La deuxième méthode a pour avantage d'économiser les colorants, puisque seule une fine couche du produit extrudé est colorée.

Le but de la présente invention est de perfectionner les dispositifs d'alimentation déjà connus, afin d'appliquer la deuxième méthode décrite ci-dessus en réalisant un changement instantané de la couleur sans déchet de matière.

Dans ce but, le dispositif selon l'invention est caractérisé en ce que la tête d'extrusion composite comporte deux orifices d'entrée de flux auxiliaire reliés auxdits orifices de sortie un orifice d'entrée de flux principal relié à l'extrudeuse principale et des conduits raccordant lesdits orifices d'entrée de flux auxiliaire au flux principal par des chemins différents, et en ce que les moyens de commande comportent un inverseur capable d'échanger les liaisons entre lesdits orifices de sortie des moyens d'alimentation auxiliaire et lesdits orifices d'entrée des flux auxiliaires.

On va décrire ci-après à titre d'exemple une forme de réalisation de l'objet de l'invention en se référant au dessin annexé, dont:

la fig. 1 est une vue en plan de dessus schématique montrant une installation d'extrusion équipée du dispositif selon l'invention,

la fig. 2 est une vue en coupe par un plan horizontal montrant à plus grande échelle la tête d'extrusion et ses différents orifices d'alimentation,

la fig. 3 est une vue en coupe selon la ligne III-III de la fig. 2, et

la fig. 4 est une vue en perspective partiellement coupée d'un segment d'un profilé en matière plastique réalisé par le dispositif des fig. 1 à 3.

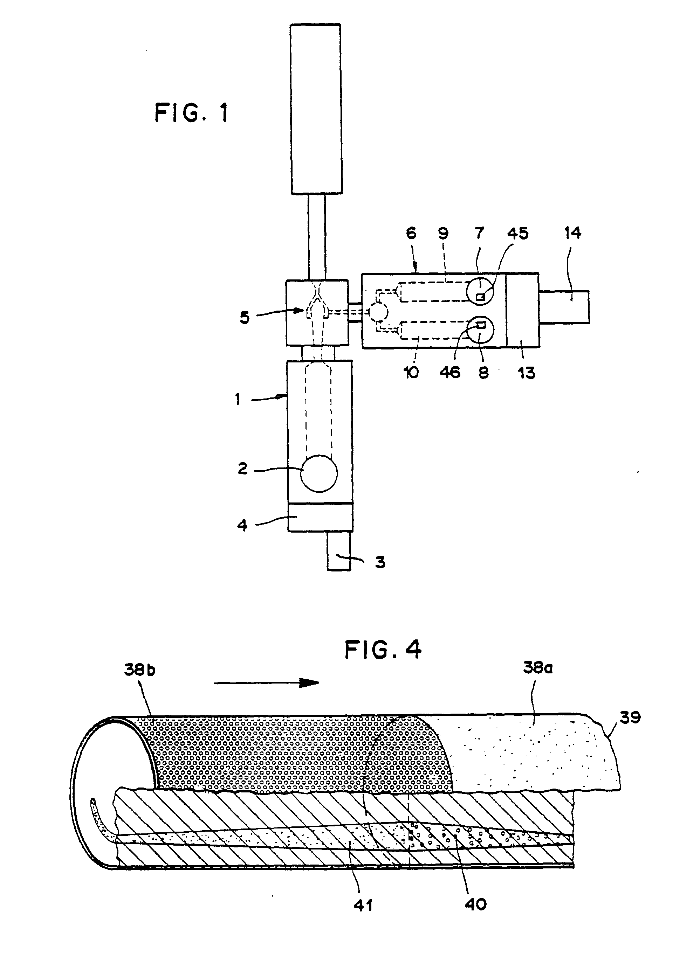

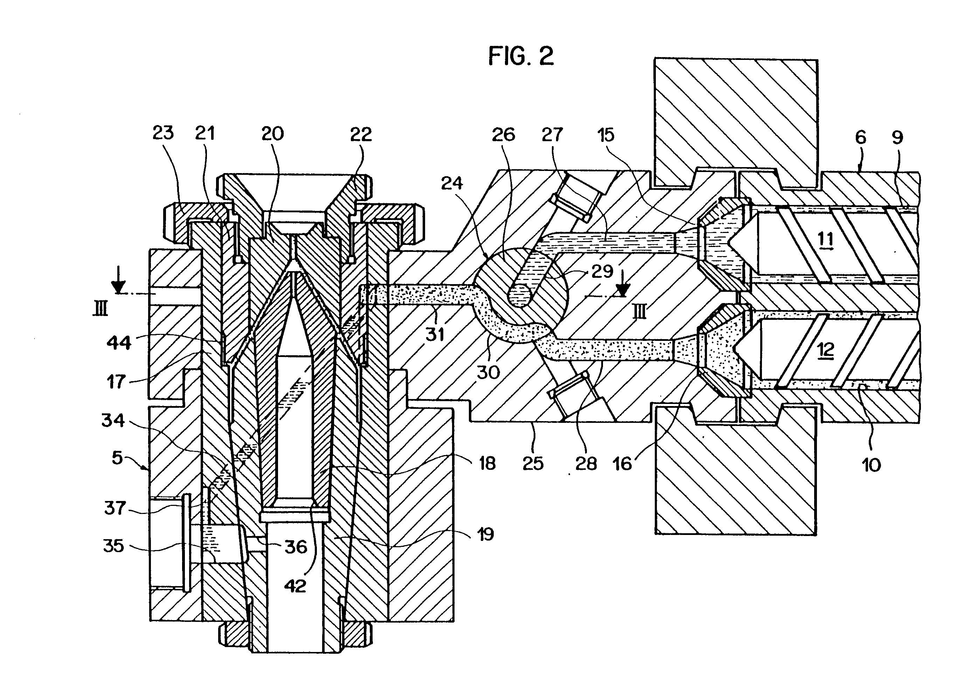

L'installation représentée à la fig. 1 est destinée à la production en continu d'un profilé en matière plastique, par exemple une barre, ou un tube, dont la section peut avoir n'importe quelle forme. Elle comporte une extrudeuse principale 1 pourvue d'une trémie d'alimentation 2, et entraînée par un moteur 3 à réducteur 4. A l'extrémité du cylindre de cette extrudeuse 1 est montée une tête d'extrusion 5 dont le détail est visible à la fig. 2. D'autre part, cette tête d'extrusion 5 est raccordée à une extrudeuse auxiliaire 6 à double vis munie à son extrémité arrière de deux trémies d'alimentation 7 et 8. Comme on le voit à la fig. 2, l'extrudeuse auxiliaire 6 comporte deux alésages cylindriques parallèles 9 et 10 dans chacun desquels tourne une vis 11 ou 12. Ces vis sont entraînées par un même réducteur de vitesse 13 à partir d'un même moteur 14 assurant que les deux vis tournent constamment à la même vitesse. Comme les dimensions des vis sont les mêmes, les flux de matière plastique formés dans les deux cylindres 9 et 10 sont de même débit et aboutissent dans les orifices de sortie 15 et 16 de l'extrudeuse 6 dans le même état de fluidité et de compression.

La fig. 2 montre en outre la constitution de la tête d'extrusion 5. Dans le corps de filière cylindrique 17 sont montées une filière principale 18, supportée par un porte-filière 19 et à l'avant du corps de filière 17 une filière auxiliaire 20 supportée par un porte filière 21 et fixée par un écrou 22, le porte-filière étant lui-même assujetti au corps 17 par un écrou 23. La filière 18 est alimentée par l'arrière de la tête d'extrusion à travers le portefilière 19 de manière classique. Ainsi, il est prévu un raccordement direct du porte-filière à la sortie du cylindre de l'extrudeuse 1.

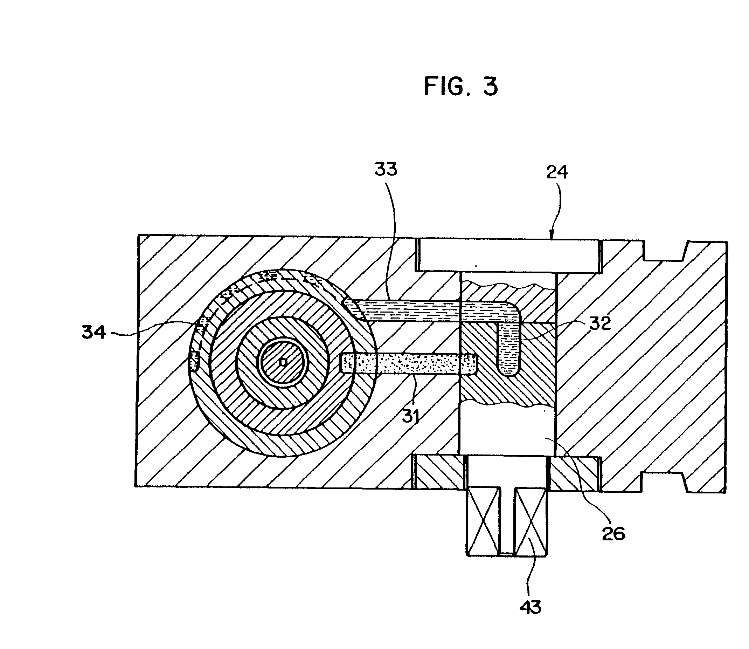

L'extrudeuse auxiliaire 6 est raccordée à la tête d'extrusion 5 par des conduits qui forment deux chemins, ceux-ci traversent une vanne 24 à plusieurs voies dont le corps 25 est fixé à l'extrémité du corps de l'extrudeuse 6 de façon à pouvoir alimenter la tête 5 latéralement. La vanne à plusieurs voies 24 comporte un pointeau 26, de forme cylindrique. A une extrémité, ce pointeau est pourvu d'un prolongement à section carrée 43 (fig. 3) permettant de le faire tourner autour de son axe d'un angle de 120° afin d'opérer la conversion des couleurs comme on le verra plus loin. Les deux voies d'entrée 27 et 28 ménagées dans le corps 25 aboutissent l'une en face d'une forure radiale 29 traversant le pointeau 26, jusqu'à son axe et l'autre en face d'une gorge 30 qui s'étend sur 120° sur le pourtour du pointeau 26. Dans la position représentée à la fig. 2, la gorge 30 met en communication la voie d'entrée 28 avec une voie de sortie 31 qui aboutit à travers le corps de filière 17 dans la surface externe du portefilière 21 et de là alimente par un conduit de répartition 44 l'espace conique compris entre les filières 20 et 18. Par cette voie, la matière plastique refoulée par la vis 12 forme une pellicule tubulaire à la surface du produit allongé qui est mis en forme dans la filière 18 avec le matériau fourni par l'extrudeuse principale. Pendant que la vanne 24 est dans la position de la fig. 2, la matière refoulée par la vis 11 passe à travers l'orifice 15 et dans le conduit 27. Elle parvient, comme on le voit à la fig. 3, à travers un conduit axial 32 du pointeau 26 dans un conduit de sortie 33 qui est raccordé à une voie hélicoïdale 34 ménagée dans le corps 17 de façon à entourer la filière 18 et parvenir par la rainure 37, le logement 35 et un conduit radial 36 dans l'orifice d'entrée 42 de la filière principale 18. Cette matière est donc mélangée à la matière fournie par l'extrudeuse principale et du fait qu'elle est projetée sous forme d'un jet dans le logement 35 à partir de la rainure 37, il se produit un mélange assez rapide de ces deux matières.

On se rend compte que les fonctions des deux vis d'extrudeuse auxiliaire 11 et 12 peuvent être inversées en faisant tourner le pointeau 26 autour de son axe d'un angle de 120° dans le sens horaire vu à la fig. 2. Dans ce cas, le conduit d'entrée 27 est alors raccordé directement au conduit de sortie 31, tandis que le conduit d'entrée 28 est raccordé par la forure radiale 29 et le canal axial 32 au conduit 33 à la voie hélicoïdale 34 et à la rainure 37.

L'utilisation du dispositif décrit et l'avantage de ce dispositif résulte de la fig. 4 qui représente en perspective coupée un segment de profilé, par exemple une tige cylindrique en matière plastique, réalisé avec le dispositif décrit. On comprendra que chacune des trémies 7 et 8 de l'extrudeuse auxiliaire 6 est munie d'un doseur volumétrique 45, 46, permettant d'engager dans cette trémie, avec la matière plastique qui l'alimente, une certaine quantité de colorant, les deux distributeurs de colorant contenant des matières de couleurs différentes, par exemple rouge et bleu. On voit donc que, si le pointeau 26 est dans la position de la fig. 2, et si le cylindre 10 est alimenté par une matière plastique pourvue d'une charge de colorant rouge, le profilé cylindrique produit par l'installation sera pourvu dans sa portion antérieure 38a d'une pellicule superificielle 39 de couleur rouge. Toutefois, l'installation permettra de changer la coloration de la pellicule superficielle 39 dans le segment suivant 38b par une simple manoeuvre de la vanne 24. Il faudra au préalable mettre en route le doseur de colorant 45 du cylindre 9 afin que la matière plastique jusqu'alors vierge, qui est conduite dans le logement 35 par les conduits 29, 32 et 33, commence à être colorée en bleu comme représenté en 40 à la fig. 4. Au moment où la longueur voulue du profilé allongé de couleur rouge aura été produite, il suffira de commuter la vanne 24. Immédiatement, la matière bleue fournie dans le conduit d'entrée 27 sera dirigée vers la filière auxiliaire 20 et donnera à la pellicule superficielle 39 une coloration bleue, qui apparaîtra sur le profilé, formant le segment 38b. La masse de matière plastique rouge que la vis 12 refoule dans le conduit 28 sera dès lors conduite par la voie de détournement 34 dans le logement 35 et formera une zone colorée 41 dans l'épaisseur du profilé. Après l'inversion des couleurs, l'introduction du colorant dans la trémie 8 par le doseur 46 pourra être stoppée, de sorte que le cylindre 10 conduira alors une matière plastique vierge, semblable à celle qui entre dans la filière 18 par l'orifice 42 à partir de l'extrudeuse principale 1.

Le système décrit se prête à la production de n'importe quel profilé de matière plastique produit en continu. Il s'applique par exemple à la production de tubes, mais également à la production de couches isolantes revêtant un conducteur électrique, à la production de gaînes sur des câbles, etc.

Le dispositif permet par exemple de produire pendant un temps donné, une certaine longueur X km de profilé allongé revêtu d'une couche superficielle d'une couleur, de changer instantanément la couleur apparente et de produire une longueur Y km du même produit revêtu d'une couche superficielle d'une autre couleur. L'extrudeuse travaille constamment une matière vierge. Les deux cylindres de l'extrudeuse auxiliaire travaillent en permanence, l'un d'eux sur de la matière vierge, l'autre sur de la matière colorée. Le passage d'une couleur à l'autre est réalisé par mise en route du doseur contenant le colorant ayant la couleur voulue, puis, au moment voulu, par manoeuvre de la vanne 24.

La mise en route des doseurs volumétriques peut être réalisée automatiquement par des moyens électroniques, tel qu'un compteur à présélection. Bien entendu on peut alterner les couleurs ou réaliser des profilés ayant successivement des tronçons de plusieurs couleurs différentes.

**Revendications**

1. Dispositif d'extrusion en continu d'un élément allongé en matière plastique, comprenant une tête d'extrusion composite (5), une extrudeuse principale (1) produisant un flux principal, des moyens d'alimentation auxiliaire (6) comportant deux orifices de sortie (15, 16) conduisant deux flux auxiliaires et des moyens de commande (24) permettant d'alimenter la tête d'extrusion (5) sélectivement, de manière que l'un ou l'autre desdits flux auxiliaires forme dans l'élément allongé une zone particulière, caractérisé en ce que la tête d'extrusion composite (5) comporte deux orifices d'entrée de flux auxiliaire (31, 33) reliés auxdits orifices de sortie (15, 16), un orifice d'e3ortie (15, 16), un orifice d'entrée (36) de flux principal relié à l'extrudeuse principale (1) et des conduits (44; 34, 37) raccordant lesdits orifices d'entrée de flux auxiliaire (31, 33) au flux principal par des chemins différents, et en ce que les moyens de commande (24) comportent un inverseur capable d'échanger les liaisons entre lesdits orifices de sortie (15, 16) des moyens d'alimentation auxiliaire et lesdits orifices d'entrée (31, 33) des flux auxiliaires.

2. Dispositif selon la revendication 1 dans lequel l'un des orifices d'entrée (31) de flux auxiliaire de la tête d'extrusion (5) est relié à des conduits (44) formant sur l'élément allongé une couche extérieure, caractérisé en ce que l'autre orifice d'entrée (33) de flux auxiliaire de la tête d'extrusion est relié à des moyens (34, 35, 37) mélangeant le flux auxiliaire conduit par cet orifice (33) avec le flux principal.

3. Dispositif selon la revendication 2, caractérisé en ce que la tête d'extrusion (5) comporte une cavité de mélange (35) raccordée, d'une part, à une entrée principale de la tête d'extrusion connectée elle-même à l'extrudeuse principale (1) et, d'autre part, audit autre orifice (33) d'entrée de flux auxiliaire.

4. Dispositif selon la revendication 1, caractérisé en ce que les moyens d'alimentation auxiliaire comportent une extrudeuse (6) à deux vis (11, 12) logées dans deux cylindres (9, 10) contenus dans un même corps.

5. Dispositif selon la revendication 4, caractérisé en ce que les deux vis (11, 12) de l'extrudeuse auxiliaire sont entraînées par un même moteur (14) par l'intermédiaire d'un réducteur de vitesse (13) unique.

6. Dispositif selon la revendication 4, caractérisé en ce que les deux cylindres (9, 10) de l'extrudeuse auxiliaire sont raccordés chacun à une trémie (7, 8) d'introduction de matière plastique, et en ce que chacune de ces trémies est pourvue d'un doseur (45, 46) de colorant.

7. Dispositif selon la revendication 1, caractérisé en ce que l'inverseur (24) comporte une vanne à deux voies d'entrée (27, 28) et deux voies de sortie (31, 33), munie d'un pointeau (26) mobile en rotation entre deux positions actives.

8. Dispositif selon la revendication 7, caractérisé en ce que le pointeau (26) est de forme cylindrique et présente, d'une part, un passage axial (32) raccordé à une voie d'entrée (29) et à une voie de sortie, toutes deux radiales, et d'autre part, un passage circonférentiel (30) en arc de cercle, situé dans un plan perpendiculaire à l'axe du pointeau, au niveau de ladite voie d'entrée (29) radiale, ladite voie d'entrée radiale et les extrémités du passage circonférentiel déterminant sur le pourtour du pointeau trois segments de cercle de 120° chacun.

## Patentansprüche

1. Einrichtung zur kontinuierlichen Extrusion eines strangförmigen Elementes aus Plastikmaterial, wobei ein zusammengesetzter Extrusionskopf (5) vorhanden ist, ein Hauptextruder (1), welcher einen Hauptfluss erzeugt, Mittel zur Hilfsbeschickung (6) mit zwei Ausgangsöffnungen (15, 16), welche zwei Hilfsströme führen und Steuermittel (24), welche es erlauben, den Extrusionskopf (5) wahlweise derart zu beschicken, dass der eine oder der andere der erwähnten Hilfsströme in dem strangförmigen Element eine besondere Zone bildet, dadurch gekennzeichnet, dass der zusammengesetzte Extrusionskopf (5) zwei Eingangsöffnungen für Hilfsströme (31, 33) aufweist, welche mit den erwähnten Ausgangsöffnungen (15, 16) verbunden sind, eine Eingangsöffnung (36) für den Hauptstrom, welche mit dem Hauptextruder (1) verbunden ist und Leitungen (44; 34, 37), welche die erwähnten Eingangsöffnungen für den Hilfsstrom (31, 33) durch verschiedene Wege an den Hauptstrom anschliessen und dass die Steuermittel (24) einen Umkehrer umfassen, welcher geeignet ist, die Verbindungen zwischen den erwähnten Ausgangsöffnungen (15, 16) der Mittel zur Hilfsbeschickung und den erwähnten Eingangsöffnungen (31, 33) der Hilfsströme umzutauschen.

2. Einrichtung nach Anspruch 1, in welcher die eine der Eingangsöffnungen (31) des Hilfsstromes des Extrusionskopfes (5) mit Leitungen (44) verbunden ist, welche über dem strangförmigen Element eine äussere Schicht ausbilden, dadurch gekennzeichnet, dass die andere Eingangsöffnung (33) des Hilfsstromes des Extrusionskopfes mit Mitteln (34, 35, 37) verbunden ist, welche den durch diese Oeffnung (33) geführten Hilfsstrom mit dem Hauptstrom mischen.

3. Einrichtung nach Anspruch 2, dadurch gekennzeichnet, dass der Extrusionskopf (5) eine Mischkammer (35) aufweist, welche einerseits an einen Haupteingang des Extrusionskopfes und andererseits an die besagte andere Oeffnung (33) des Einganges des Hilfsstromes angeschlossen ist, welcher Extrusionskopf seinerseits mit dem Hauptextruder (1) verbunden ist.

4. Einrichtung nach Anspruch 1, dadurch gekennzeichnet, dass die Mittel zur Hilfsbeschickung einen Extruder (6) mit zwei Schrauben (11, 12) umfassen, die in zwei Zylindern (9, 10) in einem gleichen Gehäuse untergebracht sind.

5. Einrichtung nach Anspruch 4, dadurch gekennzeichnet, dass die zwei Schrauben (11, 12) des Hilfsextruders durch einen gleichen Motor (14) unter Zwischenschaltung eines einzelnen Untersetzungsgetriebes (13) angetrieben werden.

6. Einrichtung nach Anspruch 4, dadurch gekennzeichnet, dass die beiden Zylinder (9, 10) des Hilfsextruders jeweils mit einem Fülltrichter (7, 8) zum Einfüllen von Plastikmaterial verbunden sind und dass jeder der Trichter mit einem Dosierer (45, 46) für Farbstoff versehen ist.

7. Einrichtung nach Anspruch 1, dadurch gekennzeichnet, dass der Umkehrer (24) ein Ventil mit zwei Eintrittswegen (27, 28) und zwei Austrittswegen (31, 33) aufweist, welches mit einem zwischen zwei aktiven Stellungen drehbaren Ventilkörper (26) ausgerüstet ist.

8. Einrichtung nach Anspruch 7, dadurch gekennzeichnet, dass der Ventilkörper eine zylindrische Form besitzt und einerseits einen axialen Durchlass (32) aufweist, welcher an einen Eingangsweg (29) und einen Ausgangsweg angeschlossen ist, welche beiden radial verlaufen, und andererseits einen Umfangsdurchtritt (30) mit kreisbogenförmiger Gestalt, welcher in einer Ebene senkrecht zur Achse des Ventilkörpers auf der Höhe des besagten radialen Eingangsweges (29) angeordnet ist, wobei der besagte radiale Eingangsweg und die Enden des Umfangsdurchtrittes auf dem Umfang des Ventilkörpers drei Kreissegmente von jeweils 120° darstellen.

## Claims

1. Device for continuous extrusion of an elongated element of plastic material, comprising an extrusion head (5), a main extruder (1) producing a main flow, auxiliary feed means (6) including two exit orifices (15, 16) conducting two auxiliary flows and control means (24) permitting selective feeding of the extrusion head (5), in a manner in which one or the other of these auxiliary flows forms a special zone in the elongated element, characterized in that the compound extrusion head (5) comprises two entrance orifices of the auxiliary flow (31, 33) connected to said exit orifices (15, 16), an entrance orifice (36) of the main flow connected to the main extruder (1) and conduits (44; 34, 37) joining the said entrance orifices of the auxiliary flow (31, 33) to the principle flow by different ways, and in that the control means (24) comprise a reversing device (24) capable of exchanging the connections between the said exit orifices (15, 16) of the auxiliary feed means and the said entrance orifices (31, 33) of the auxiliary flow.

2. Device according to claim 1 in which one of the entrance orifices (31) of auxiliary flow of the extrusion head (5) is connected to conduits (44) forming on the elongated element an exterior layer, characterized in that the other entrance orifice (33) of auxiliary flow of the extrusion head is connected to means (34, 35, 37) mixing the auxiliary flow directed by that orifice (33) with the principle flow.

3. Device according to claim 2, characterized in that the extrusion head (5) comprises a mixing receptacle (35) joined, on the one hand, to a main entrance of the extrusion head, the same connected to the main extruder (1) and, on the other hand, to the said other entrance orifice (33) of the auxiliary flow.

4. Device according to claim 1, characterized in that the means of auxiliary feed comprise an extruder (6) having two screws (11, 12) housed in two cylinders (9, 10) contained in a single body.

5. Device according to claim 4, characterized in that the two screws (11, 12) of the auxiliary extruder are driven by a single motor (14) through the intermediary of a single speed-reduction gear (13).

6. Device according to claim 4, characterized in that the two cylinders (9, 10) of the auxiliary extruder are each connected to a hopper (7, 8) for introducing plastic material, and in that each of these hoppers is provided with a colorant-metering apparatus (45, 46).

7. Device according to claim 1, characterized in that the reversing device (24) comprises a valve having two inlet ways (27, 28) and two outlet ways (31, 33), provided with a valve needle (26) rotatable between two active positions.

8. Device according to claim 7, characterized in that the valve needle (26) is of cylindrical shape and has, on the one hand, an axial passage (32) connected to an inlet way (29) and an outlet way, both radial, and, on the other hand, an arcuate circumferential passage (30) situated in a plane perpendicular to the axis of the valve needle, at the level of the said radial inlet way (29), the said radial inlet way and the ends of the circumferential passage defining three segments of circles of 120° each on the circumference of the valve needle.

FIG. 1

FIG. 4

1

FIG. 2

# FIG. 3

EP 0 259 389 B1